# EUROPÄISCHE PATENTSCHRIFT

(11) **EP 1 966 468 B1**
(45) Veröffentlichungstag und Bekanntmachung des Hinweises auf die Patenterteilung: **18.11.2009**
(21) Anmeldenummer: 06819954.6
(22) Anmeldetag: 13.12.2006
(51) Int. Cl.: F01N 3/08, F02D 41/02, B01D 53/94, F01N 3/20

(54) **VERFAHREN UND VORRICHTUNG ZUR REGENERATION EINER ABGASREINIGUNGSANLAGE**
METHOD AND DEVICE FOR REGENERATING AN EMISSION CONTROL SYSTEM
PROCEDE ET DISPOSITIF DE REGENERATION D'UN SYSTEME DE TRAITEMENT DE GAZ D'ECHAPPEMENT

(30) Priorität: 23.12.2005 DE 102005061872
(43) Veröffentlichungstag der Anmeldung: 10.09.2008
(73) Patentinhaber: ROBERT BOSCH GMBH, 70442 Stuttgart (DE)
(72) Erfinder: SCHWEIZER, Frank, 71409 Schwaikheim (DE); SCHERER, Stefan, 70329 Stuttgart (DE); HARTMANN, Gerd, 76356 Weingarten (DE)
(86) Internationale Anmeldenummer: PCT/EP2006/069681
(87) Internationale Veröffentlichungsnummer: WO 2007/074071

(56) Entgegenhaltungen:
- EP-A2- 0 903 479
- DE-A1- 10 023 079
- DE-A1- 19 739 848
- GB-A- 2 410 203

## Beschreibung

### Stand der Technik

Die Erfindung betrifft ein Verfahren zur Regeneration einer Abgasreinigungsanlage einer Brennkraftmaschine mit einem Speicherkatalysator, wobei in einem Abgasstrang vor dem Speicherkatalysator eine erste Abgassonde und in einem zweiten Abgasstrang nach dem Speicherkatalysator eine zweite Abgassonde angeordnet ist, wobei ein erstes Ausgangssignal einer ersten Abgassonde und ein zweites Ausgangssignal einer zweiten Abgassonde an eine Motorsteuerung weitergeleitet werden und wobei der Speicherkatalysator durch Beaufschlagung mit einem Reduktionsmittel in einer Regenerationsphase regeneriert wird. Die Erfindung betrifft weiterhin eine Vorrichtung zum Betrieb dieser Abgasreinigungsanlage.

Im Zusammenhang mit künftigen gesetzlichen Vorgaben bezüglich der Stickoxidemission von Kraftfahrzeugen ist eine entsprechende Abgasbehandlung erforderlich. Um die entstehenden Stickoxide aufzunehmen, kann ein Stickoxid-Speicherkatalysator eingesetzt werden. Der Speicherkatalysator kann jedoch nur eine begrenzte Menge an Stickoxiden aufnehmen und muss spätestens bei Erreichung der maximalen Speicherfähigkeit regeneriert werden. Ein Verfahren zur Regeneration besteht darin, für einen bestimmten Zeitraum der Brennkraftmaschine ein überstöchiometrisch mit Kraftstoff angereichertes Kraftstoff-Luft-Gemisch zuzuführen und das entstehende "fette" Abgas über den Speicherkatalysator zu leiten. Das im fetten Abgas enthaltene Kohlenmonoxid und die ebenfalls enthaltenen Kohlenwasserstoffe werden von den im Speicherkatalysator vorhandenen Stickoxiden zu Kohlendioxid und Wasser oxidiert. Der entstehende Stickstoff wird mit dem Abgas abgeführt. Typischerweise wird das Ende der Regeneration dadurch bestimmt, dass fettes Abgas den Speicherkatalysator ohne zu reagieren wieder verlässt Dies wird mittels des linearen oder binären Signals einer Abgassonde detektiert.

Alternativ zur Steuerung des Kraftstoff-Luft-Gemischs in Richtung eines höheren Kraftstoffanteils kann die Regeneration auch durch direkte Zugabe eines Reduktionsmittels in den Abgasstrang erfolgen.

Aus der DE 197 39 848 A1 ist eine Möglichkeit bekannt, das Ende der Phase mit fettem Abgas festzulegen. Dazu wird eine Sauerstoff messende Sonde im Abgas hinter dem Speicherkatalysator angeordnet. Sobald diese Sonde einen Übergang von einem mageren auf ein fettes Gemisch erkennt, bedeutet dies, dass der Speicherkatalysator nicht mehr genug Sauerstoff zur Oxidation der Kohlenwasserstoffe und des Kohlenmonoxides abgibt und von Sauerstoff enthaltendem Stickoxid entladen ist. Daraufhin kann die Phase mit Sauerstoffmangel beendet werden und wieder zur Phase mit magerem Gemisch (Sauerstoffüberschuss) umgesteuert werden. Da der Übergang von magerem Abgas zu fettem Abgas hinter dem Speicherkatalysator langsam erfolgt, muss bei Beendigung der Regenerationsphase ein Durchbruch von Kohlenmonoxid und Kohlenwasserstoffen in Kauf genommen werden, um den Katalysator vollständig von gespeichertem Stickoxid zu entleeren. Es treten unerwünschte Kohlenmonoxid- und Kohlenwasserstoffemissionen auf, die Probleme bei der Einhaltung von Schadstoffgrenzwerten bereiten könnten. Weiterhin wird durch die Verlängerung der Regenerationsphasen über das nötige Maß der Kraftstoffverbrauch erhöht.

Ein weiteres Verfahren und eine Vorrichtung zur Regeneration einer Abgasreinigungsanlage einer. Brennkraftmaschine sind in der GB 2 410 203 A gezeigt. Hierbei sind eine Haupt- und eine Sekundär-Speichereinrichtung für Stickoxide vorgesehen, wobei vor dem und hinter dem Sekundär-Speicher Abgassonden angeordnet sind und die Sekundär-Speichereinrichtung zur Einlagerung von zumindest einem Teil der NOₓ-Masse des charakteristischen NOₓ-Desorptionspeaks zu Beginn einer NOₓ-Regenerationsphase der Hauptspeichereinrichtung und zur oxidativen Umsetzung von Reduktionsmittelmasse des charakteristischen Reduktionsmitteldurchbruchs nach Beendigung der NOₓ Regenerationsphase mittels der eingelagerten NOₓ Masse ausgebildet und bestimmt ist.

Eine weitere Abgasreinigungsanlage einer Brennkraftmaschine mit einem Verfahren und einer Vorrichtung zu deren Regeneration zeigt die EP 0 903 479 A2, wobei die Regeneration auf der Basis der Signale von Abgassonden erfolgt, die vor und hinter einem Speicherkatalysator angeordnet sind.

Auch aus der US 5,775,099 ist ein Verfahren zur Abgasreinigung einer Brennkraftmaschine bekannt. Die Abgase der Brennkraftmaschine werden durch einen Speicherkatalysator geleitet. Bei einem mageren Luft-Kraftstoff-Verhältnis weist das Abgas einen hohen Stickoxidanteil auf, der im Speicherkatalysator gespeichert wird. Bei einem stöchiometrischen oder fetten Luft-Kraftstoff-Gemisch wird das Stickoxid aus dem Speicherkatalysator zu Stickstoff reduziert. Hierzu schfägt die US 5,775,099 vor, die Kraftstoffmenge zu erhöhen, so dass sich ein stöchiometrisches oder fettes Luft-Kraftstoff-Verhältnis ergibt. Dabei wird Kraftstoff am Ende des Verdichtungshubs in der Menge eingespritzt, dass sich ein mageres mittleres Luft-Kraftstoff-Gemisch bildet und zusätzlich Kraftstoff während des Ansaughubs eingespritzt, dass sich ein stöchiometrisches oder fettes Luft- Kraftstoff-Gemisch ergibt. Das derart erzeugte Abgas liefert die nötigen Bestandteile zur Regeneration des Speicherkatafysators.

Nachteilig an den beschriebenen Verfahren ist, dass ein Anteil des im fetten Abgas enthaltenen. Reduktionsmittels den Speicherkatalysator bereits wieder verlässt, bevor dieser vollständig regeneriert ist. Diese Umsetzungsrate des Speicherkatalysators ist stark von der Temperatur der Oberfläche des Speicherkatalysators, dem Abgasvolumenstrom, dem Füllgrad und der Alterung des Speichermaterials abhängig. Die Zudosierung von Reduktionsmittel muss daher auf die genannten Einflussgrößen abgestimmt werden.

Es ist Aufgabe der Erfindung, ein Verfahren zur Regeneration einer Abgasreinigungsanlage bereitzustellen, die das Reduktionsmittel so dosiert, dass kein unnötiger Mehrverbrauch stattfindet und somit die Umwelt nicht unnötig belastet wird.

Es ist weiterhin Aufgabe der Erfindung, eine entsprechende Vorrichtung bereitzustellen.

### Vorteile der Erfindung

Die Aufgabe der Erfindung wird dadurch gelöst, dass während der Regenerationsphase des Speicherkatalysators die Menge des Reduktionsmittels durch die Motorsteuerung gesteuert wird, wobei die Motorsteuerung die Menge des nach dem Speicherkatalysator auftretenden Reduktionsmittels mittels des zweiten Ausgangssignals der dem Speicherkatalysator nachgeordneten zweiten Abgassonde erfasst. Damit kann im Hinblick auf eine optimierte Dosierung der Einsatz an Reduktionsmitteln deutlich reduziert werden. Ein durch die Regeneration des Speicherkatalysators bedingter Mehrverbrauch an Kraftstoff oder Reduktionsmittel wird minimiert. Durch das erfindungsgemäße Verfahren wird dem Speicherkatalysator in jedem Moment gerade so viel Reduktionsmittel zugeführt, wie er umsetzen kann. Weiterhin verbessern sich durch das Verfahren die Abgaswerte, was einen wesentlichen Beitrag zur Einhaltung der Abgasgrenzwerte bedeutet.

Eine bevorzugte Verfahrensvariante sieht vor, dass die Zugabe von Reduktionsmittel so lange erfolgt, bis das zweite Ausgangssignal der zweiten Abgassonde der zweiten Abgassonde einem im wesentlichen gleichen Lambdawert entspricht wie das erste Ausgangssignal, der ersten Abgassonde. Damit wird gleichzeitig auf die während der Betriebszeit der Brennkraftmaschine zunehmende Schädigung beziehungsweise Alterung des Speicherkatalysators reagiert, ohne dass dazu eine Vorsteuerung, die diese Einflüsse im Steuergerät berechnen müsste, notwendig wäre. Dies ist insbesondere von Bedeutung, da die thermische Schädigung des Speicherkatalysators über die Lebensdauer nur sehr grob abgeschätzt und das tatsächliche Verhalten des Reduktionsmitteldurchbruchs nur sehr ungenau vorhergesagt werden kann. Insbesondere in Abgas-Mess-Zyklen mit geringer Motorlast und folglich geringer Temperatur des Speicherkatalysators ermöglicht eine solche Regelung erst die Einhaltung der strengen Abgasgesetzgebung.

Wird das zweite Ausgangssignal der zweiten Abgassonde als Störgröße für den Lambda-Sollwert verwendet, kann erreicht werden, dass bei einer Verringerung der Umsetzungsrate des Speicherkatalysators die Zudosierung des Reduktionsmittels verringert wird und somit Reduktionsmittel oder, bei Verwendung von fettem Abgas zur Reduktion, Kraftstoff gespart werden kann.

In einer bevorzugten Ausführungsvariante wird aus der Differenz eines Lambda-Wertes von "eins" und dem zweiten Ausgangssignal der zweiten Abgassonde ein Korrektursignal gebildet und das Korrektursignal zu dem Lambda-Sollwert zur Bildung eines korrigierten Lambda-Sollwertes addiert. Damit wird der Durchbruch an Reduktionsmittel während der Regeneration unterdrückt.

Eine bevorzugte Verfahrensvariante sieht vor, dass eine Korrektur des Lambda-Sollwertes nur während einer Regenerationsphase vorgenommen wird. Dadurch ist sichergestellt, dass die Korrektur nur in die Regenerationsphase, nicht aber in den restlichen Fahrbetrieb eingreift.

Weiterhin wird die Korrektur des Lambda-Sollwerts nur dann vorgenommen, wenn dadurch der Lambda-Sollwert in Richtung höherer Lambdawerte unterhalb von einem Lambda-Wert von "eins" korrigiert wird. Damit wird verhindert, dass eine einmal vorgenommene Korrektur wieder zurückgenommen wird. Eine einmal eingetretene Verringerung der Umsetzungsrate des Speicherkatalysators vermindert sich nicht ohne äußere Einflüsse wieder, so dass diese Art der Korrektur des Lambda-Sollwerts die physikalischen Hintergründe korrekt berücksichtigt. Korrekturen werden nur vorgenommen, wenn der Lambda-Wert vor dem Speicherkatalysator "eingeregelt" ist und damit um weniger als eine vorgegebene Grenze vom Lambda-Sollwert abweicht.

In einer weiteren bevorzugten Ausführungsform ist vorgesehen, dass die Regenerationsphase bei einer vorbestimmten Höhe des Korrektursignals oder des gefilterten Korrektursignals beendet wird. Das Korrektursignal ist ein Maß für die Verringerung der Umsetzungsrate im Speicherkatalysator, die sich verringert, wenn der Speicherkatalysator regeneriert ist. Für das Korrektursignal kann daher eine Grenze festgelegt werden, ab der der Speicherkatalysator als regeneriert anzusehen ist. Hierdurch kann die Regenerationsdauer als auch der Einsatz an Reduktionsmittel minimiert werden.

Die die Vorrichtung betreffende Aufgabe wird dadurch gelöst, dass die dem Speicherkatalysator vorgeschaltete erste Abgassonde als eine lineare Abgassonde ausgebildet ist und dass die dem Speicherkatalysator nachgeschaltete zweite Abgassonde als lineare Abgassonde oder als Abgassonde mit Sprungcharakteristik ausgebildet ist. Lineare Abgassonden zeigen beim Übergang von einem mageren Gemisch zu einem fetten Gemisch Zwischenwerte an und sind daher für das erfindungsgemäße Verfahren besonders geeignet. Abgassonden mit Sprungcharakteristik sind demgegenüber besonders kostengünstig.

Bei neueren Brennkraftmaschinen wird die zweite Abgassonde im Rahmen der "On Board Diagnose" auch dazu verwendet, die Funktion des Speicherkatalysators zu überwachen. Ist als zweite Abgassonde eine lineare Abgassonde vorgesehen, kann das Motorsteuergerät das erste Ausgangssignal der ersten Abgassonde vor dem Speicherkatalysator mit dem zweiten Ausgangssignal der zweiten Abgassonde hinter dem Speicherkatalysator vergleichen.

Ist die Motorsteuerung zur Durchführung des erfindungsgemäßen Verfahrens ausgebildet, kann mit geringem Mehraufwand in der Steuerung ohne zusätzliche Einrichtungen eine Einsparung von Reduktionsmittel beziehungsweise Kraftstoff erreicht werden.

### Zeichnungen

Die Erfindung wird im Folgenden anhand der in den Figuren dargestellten Ausführungsbeispiele näher erläutert. Es zeigen:
- Figur 1: in schematischer Darstellung eine Brennkraftmaschine mit Abgasreinigungsanlage,
- Figur 2: einen Signalverlauf der Ausgangssignale der Abgassonden sowie den Lambda-Sollwert,
- Figur 3: das Korrektursignal sowie das gefilterte Korrektursignal,
- Figur 4: die Wirkung der erfindungsgemäßen Korrektur

### Beschreibung der Ausführungsbeispiele

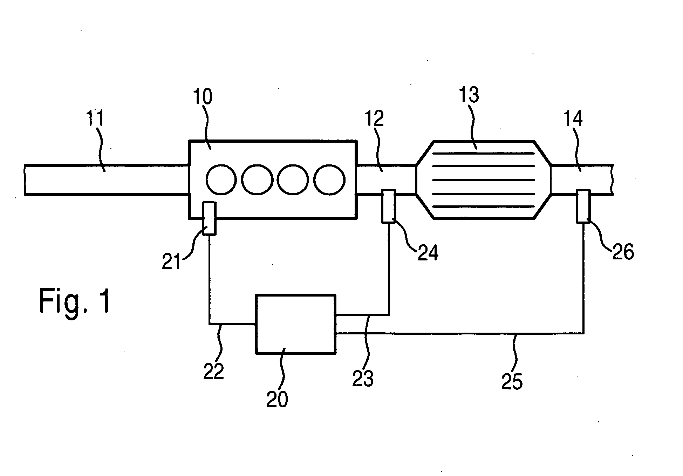

Figur 1 zeigt schematisch eine Brennkraftmaschine 10 mit einem Speicherkatalysator 13 und einer Motorsteuerung 20, die die Betriebsparameter der Brennkraftmaschine 10 steuert. Die Brennkraftmaschine 10 wird über ein Ansaugrohr 11 mit Verbrennungsluft versorgt. Über einen Abgasstrang 12 wird das Abgas aus der Brennkraftmaschine 10 einer Abgasreinigungsanlage einem Speicherkatalysator 13 zugeführt, wobei der Sauerstoffgehalt des Abgase mit einer als lineare Abgassonde ausgeführten ersten Abgassonde 24 gemessen wird und die Daten mittels einer ersten Ausgangssignalleitung 23 der Motorsteuerung 20 zugeführt werden. Die Motorsteuerung 20 legt daraus die erforderliche zuzuführende Kraftstoffmenge fest und steuert sie über eine Signalleitung 22 und eine Kraftstoffzumessung 21 ein. Der Speicherkatalysator 13 hat eine begrenzte Speicherkapazität und muss bei deren Erreichen regeneriert werden. Dies kann durch zusätzliches Einspritzen von Kraftstoff über die Kraftstoffzumessung 21 innermotorisch oder durch Zugabe eines Reduktionsmittels in den Abgasstrang 12 erfolgen.

Zur Kontrolle der Funktion der Abgasreinigungsanlage und zur Feststellung des Durchtritts von Reduktionsmittel und damit zur Beendigung eines Regenerationszyklus ist eine zweite Abgassonde 26 hinter dem Speicherkatalysator 13 in einem zweiten Abgasstrang 14 angeordnet, deren Ausgangssignal über eine zweite Ausgangssignalleitung 25 ebenfalls der Motorsteuerung 20 zugeführt wird.

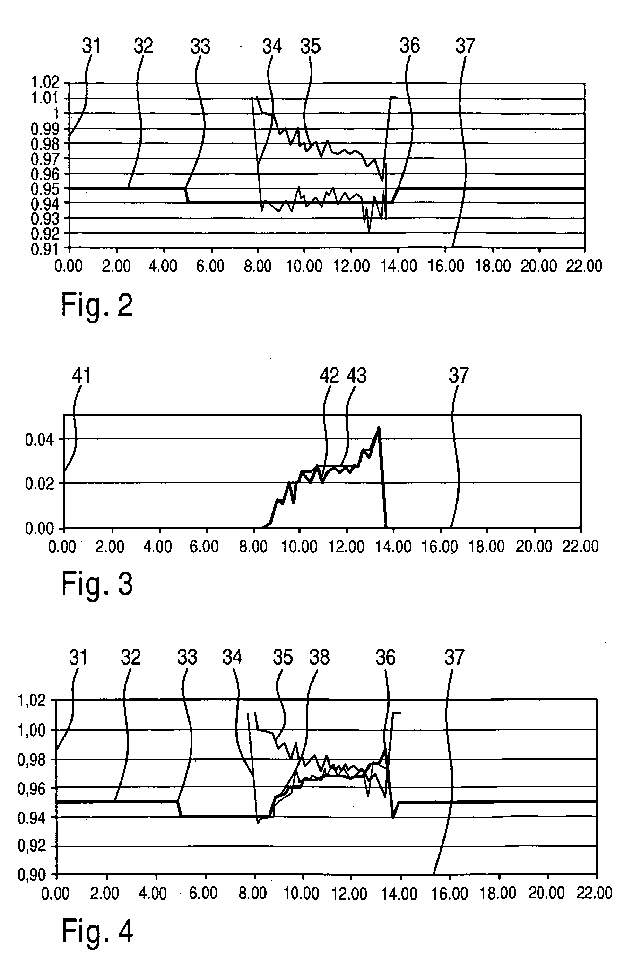

In Figur 2 ist der Verlauf eines ersten Ausgangssignals 34 der ersten Abgassonde 24, eines zweiten Ausgangssignals 35 der zweiten Abgassonde 26 sowie ein Lambda-Sollwert 32 am Ort der ersten Abgassonde 24 in Abhängigkeit von einer Zeit-Achse 37 auf einer Lambda-Achse 31 aufgetragen. Ein Beginn einer Regeneration 33 ist hier zu einem ersten Zeitpunkt dargestellt, an dem die Speicherkapazität des Speicherkatalysators 13 erschöpft ist. Um die Regeneration durchzuführen, wird der Lambda-Sollwert 32 ab dem Beginn der Regeneration 33 auf einen Wert von 0,94 eingestellt. Das erste Ausgangssignal 34 der ersten Abgassonde 24 folgt mit einer gewissen Verzögerung der Änderung des Lambda-Sollwerts 32. Das zweite Ausgangssignal 35 der zweiten Abgassonde 26 zeigt durch eine Abnahme des Lambdawertes an, dass im Verlauf der Regenerationsphase zunehmend Reduktionsmittel nach dem Speicherkatalysator 13 auftritt. Ein Ende der Regeneration 36 wird dadurch eingeleitet, dass der Lambda-Sollwert 32 auf den Wert vor der Regenerationsphase angehoben wird.

In Figur 3 ist ein Korrektursignal 42 sowie ein gefiltertes Korrektursignal 43 entlang der Zeit-Achse 37 auf einer Korrektursignal-Achse aufgetragen. Das Korrektursignal 42 wird aus der Abweichung des hier nicht dargestellten zweiten Ausgangssignals 35 von einem Lambda-Wert von "eins" bestimmt. Das gefilterte Korrektursignal 43 wird aus dem Korrektursignal 42 bestimmt, indem Änderungen des Korrektursignals 42 zu einem höheren Lambda-Wert übernommen werden, solange das gefilterte Korrektursignal 43 unter einem Lambdawert von "eins" bleibt.

In Figur 4 ist die Wirkung der erfindungsgemäßen Korrektur auf den Lambda-Sollwert 32 gezeigt. Nach dem Beginn der Regeneration 33 zeigt das zweite Ausgangssignal 35 ein Absinken des Lambda-Wertes an. Das in Figur 3 dargestellte gefilterte Korrektursignal 43 wird zu dem Lambda-Sollwert 32 addiert und ein korrigierter Lambda-Sollwert 38 gebildet. Dessen Verlauf folgt das erste Ausgangssignal 34. Im Vergleich mit Figur 2 ist festzustellen, dass das zweite Ausgangssignal 35 durch die erfindungsgemäße Korrektur eine geringere Abweichung von einem Lambda-Wert von "eins" einnimmt und somit ein geringerer Durchtritt von Reduktionsmittel erfolgt als in der Ausführung nach Figur 1. Bei einer vorbestimmten Höhe des gefilterten Korrektursignals 43 und damit auch des korrigierten Lambda-Sollwerts 38 wird davon ausgegangen, dass die Regenerationsphase beendet werden kann und es wird das Ende der Regeneration 36 ausgelöst.

## Patentansprüche

1. Verfahren zur Regeneration einer Abgasreinigungsanlage einer Brennkraftmaschine (10) mit einem Speicherkatalysator (13), wobei in einem Abgasstrang (12) vor dem Speicherkatalysator (13) eine erste Abgassonde (24) und in einem zweiten Abgasstrang (14) nach dem Speicherkatalysator (13) eine zweite Abgassonde (26) angeordnet ist, wobei ein erstes Ausgangssignal (34) der ersten Abgassonde (24) und ein zweites Ausgangsignal (35) der zweiten Abgassonde (26) an eine Motorsteuerung (20) weitergeleitet werden, wobei der Speicherkatalysator (13) durch Beaufschlagung mit einem Reduktionsmittel in einer Regenerationsphase unter Änderung eines Lambda-Sollwerts (32) regeneriert wird, wobei während der Regenerationsphase des Speicherkatalysators (13) die Menge des Reduktionsmittels durch die Motorsteuerung (20) gesteuert wird und wobei die Motorsteuerung (20) die Menge des nach dem Speicherkatalysator (13) auftretenden Reduktionsmittels mittels des zweiten Ausgangssignals (35) der dem Speicherkatalysator (13) nachgeordneten zweiten Abgassonde (26) erfasst, **dadurch gekennzeichnet, dass** aus der Differenz eines Lambda-Wertes von "eins" und dem zweiten Ausgangssignal (35) der zweiten Abgassonde (26) ein Korrektursignal (42) gebildet und dass das Korrektursignal (42) zu dem Lambda-Sollwert (32) zur Bildung eines korrigierten Lambda-Sollwertes (38) addiert wird.

2. Verfahren nach Anspruch 1, **dadurch gekennzeichnet, dass** die Zugabe von Reduktionsmittel so lange erfolgt, bis das zweite Ausgangssignal (35) der zweiten Abgassonde (26) einem im Wesentlichen gleichen Lambdawert entspricht wie das erste Ausgangssignal (34) der ersten Abgassonde (24).

3. Verfahren nach Anspruch 1 oder 2, **dadurch gekennzeichnet, dass** das zweite Ausgangssignal (35) der zweiten Abgassonde (26) als Störgröße für den Lambda-Sollwert (32) verwendet, wird.

4. Verfahren nach einem der Ansprüche 1 bis 3, **dadurch gekennzeichnet, dass** eine Korrektur des Lambda-Sollwertes (32) nur während einer Regenerationsphase vorgenommen wird.

5. Verfahren nach einem der Ansprüche 1 bis 4, **dadurch gekennzeichnet, dass** die Korrektur des Lambda-Sollwertes (32) nur dann vorgenommen wird, wenn **dadurch** der Lambda-Sollwert (32) in Richtung höherer Lambdawerte unterhalb von einem Lambda-Wert von "eins" korrigiert wird.

6. Verfahren nach einem der Ansprüche 1 bis 5, **dadurch gekennzeichnet, dass** die Regenerationsphase bei einer bestimmten Höhe des Korrektursignals (42) oder des gefilterten Korrektursignals (43) beendet wird.

7. Vorrichtung zur Regeneration einer Abgasreinigungsanlage einer Brennkraftmaschine (10) mit einem Speicherkatalysator (13), wobei in einem Abgasstrang (12) vor dem Speicherkatalysator (13) eine erste Abgassonde (24) und in einem zweiten Abgasstrang (14) nach dem Speicherkatalysator (13) eine zweite Abgassonde (26) angeordnet ist, die über eine erste Ausgangssignalleitung (23) und eine zweite Ausgangssignalleitung (25) mit einer Motorsteuerung (20) in Verbindung stehen, wobei der Speicherkatalysator (13) durch Beaufschlagung mit einem Reduktionsmittel in einer Regenerationsphase regeneriert wird, wobei die dem Speicherkatalysator (13) vorgeschaltete erste Abgassonde (24) als eine lineare Abgassonde ausgebildet ist und wobei die dem Speicherkatalysator (13) nachgeschaltete zweite Abgassonde (26) als lineare Abgassonde oder als Abgassonde mit Sprungcharakteristik ausgebildet ist, **dadurch gekennzeichnet, dass** die Motorsteuerung (20) zur Durchführung eines Verfahrens nach mindestens einem der Ansprüche 1 bis 6 ausgebildet ist.

## Claims

1. Method for the regeneration of an exhaust-gas purification system of an internal combustion engine (10) having a storage catalytic converter (13), with a first exhaust-gas probe (24) being arranged in an exhaust section (12) upstream of the storage catalytic converter (13) and with a second exhaust-gas probe (26) being arranged in a second exhaust section (14) downstream of the storage catalytic converter (13), with a first output signal (34) from the first exhaust-gas probe (24) and a second output signal (35) from the second exhaust-gas probe (26) being transmitted to an engine controller (20), with the storage catalytic converter (13) being regenerated by being acted on with a reducing agent in a regeneration phase with a change in a lambda nominal value (32), with the quantity of reducing agent being controlled by the engine controller (20) during the regeneration phase of the storage catalytic converter (13), and with the engine controller (20) measuring the quantity of reducing agent occurring downstream of the storage catalytic converter (13) by means of the second output signal (35) from the second exhaust-gas probe (26) which is arranged downstream of the storage catalytic converter (13), **characterized in that** a corrective signal (42) is formed from the difference between a lambda value of "one" and the second output signal (35) from the second exhaust-gas probe (26), and **in that** the corrective signal (42) is added to the lambda nominal value (32) to form a corrected lambda nominal value (38).

2. Method according to Claim 1, **characterized in that** the addition of reducing agent takes place until the second output signal (35) from the second exhaust-gas probe (26) corresponds to a substantially equal lambda value to the first output signal (34) from the first exhaust-gas probe (24).

3. Method according to Claim 1 or 2, **characterized in that** the second output signal (35) from the second exhaust-gas probe (26) is used as a disturbance variable for the lambda nominal value (32).

4. Method according to one of Claims 1 to 3, **characterized in that** a correction of the lambda nominal value (32) is carried out only during a regeneration phase.

5. Method according to one of Claims 1 to 4, **characterized in that** the correction of the lambda nominal value (32) is carried out only if the lambda nominal value (32) is thereby corrected in the direction of higher lambda values below a lambda value of "one".

6. Method according to one of Claims 1 to 5, **characterized in that** the regeneration phase is ended when the corrective signal (42) or the filtered corrective signal (43) is at a certain level.

7. Device for the regeneration of an exhaust-gas purification system of an internal combustion engine (10) having a storage catalytic converter (13), with a first exhaust-gas probe (24) being arranged in an exhaust section (12) upstream of the storage catalytic converter (13) and with a second exhaust-gas probe (26) being arranged in a second exhaust section (14) downstream of the storage catalytic converter (13), which first exhaust-gas probe (24) and second exhaust-gas probe (26) are connected by means of a first output signal line (23) and a second output signal line (25) to an engine controller (20), with the storage catalytic converter (13) being regenerated by being acted on with a reducing agent in a regeneration phase, with the first exhaust-gas probe (24) which is arranged upstream of the storage catalytic converter (13) being designed as a linear exhaust-gas probe and with the second exhaust-gas probe (26) which is arranged downstream of the storage catalytic converter (13) being designed as a linear exhaust-gas probe or as an exhaust-gas probe with a step characteristic, **characterized in that** the engine controller (20) is designed to carry out a method according to at least one of Claims 1 to 6.

## Revendications

1. Procédé de régénération d'une installation de traitement de gaz d'échappement d'un moteur à combustion interne (10) comprenant un catalyseur d'accumulation (13), une première sonde de gaz d'échappement (24) étant disposée dans une ligne d'échappement (12) avant le catalyseur d'accumulation (13) et une deuxième sonde de gaz d'échappement (26) étant disposée dans une deuxième ligne d'échappement (14) après le catalyseur d'accumulation (13), un premier signal de sortie (34) de la première sonde de gaz d'échappement (24) et un deuxième signal de sortie (35) de la deuxième sonde de gaz d'échappement (26) étant acheminés à une commande de moteur (20), le catalyseur d'accumulation (13) étant régénéré par sollicitation avec un agent réducteur dans une phase de régénération avec modification d'une valeur de consigne lambda "(32), la quantité d'agent réducteur étant commandée par la commande de moteur (20) pendant la phase de régénération du catalyseur d'accumulation (13) et la commande de moteur (20) détectant la quantité d'agent réducteur présente après le catalyseur d'accumulation (13) au moyen du deuxième signal de sortie (35) de la deuxième sonde de gaz d'échappement (26) disposée après le catalyseur d'accumulation (13), **caractérisé en ce que** l'on crée à partir de la différence d'une valeur lambda de "un" et du deuxième signal de sortie (35) de la deuxième sonde de gaz d'échappement (26) un signal de correction (42) et **en ce que** le signal de correction (42) est ajouté à la valeur de consigne lambda (32) pour créer une valeur de consigne lambda corrigée (38).

2. Procédé selon la revendication 1, **caractérisé en ce que** l'addition d'agent réducteur a lieu jusqu'à ce que le deuxième signal de sortie (35) de la deuxième sonde de gaz d'échappement (26) corresponde à une valeur lambda essentiellement égale à celle du premier signal de sortie (34) de la première sonde de gaz d'échappement (24).

3. Procédé selon la revendication 1 ou 2, **caractérisé en ce que** le deuxième signal de sortie (35) de la deuxième sonde de gaz d'échappement (26) est utilisé comme valeur parasite pour la valeur de consigne lambda (32).

4. Procédé selon l'une quelconque des revendications 1 à 3, **caractérisé en ce qu'**une correction de la valeur de consigne lambda (32) zest effectuée que pendant une phase de régénération.

5. Procédé selon l'une quelconque des revendications 1 à 4, **caractérisé en ce que** la correction de la valeur de consigne lambda (32) n'est effectuée que lorsque de ce fait la valeur de consigne lambda (32) est corrigée dans le sens de valeurs lambda plus élevées inférieures à une valeur lambda de "un".

6. Procédé selon l'une quelconque des revendications 1 à 5, **caractérisé en ce que** la phase de régénération est terminée à une hauteur déterminée du signal de correction (42) ou du signal de correction filtré (43).

7. Dispositif de régénération d'une installation de traitement de gaz d'échappement d'un moteur à combustion interne (10) comprenant un catalyseur d'accumulation (13), une première sonde de gaz d'échappement (24) étant disposée dans une ligne d'échappement (12) avant le catalyseur d'accumulation (13) et une deuxième sonde de gaz d'échappement (26) étant disposée dans une deuxième ligne d'échappement (14) après le catalyseur d'accumulation (13), les sondes de gaz d'échappement étant connectées par le biais d'une première ligne de signal de sortie (23) et d'une deuxième ligne de signal de sortie (25) à une commande de moteur (20), le catalyseur d'accumulation (13) étant régénéré par sollicitation avec un agent réducteur dans une phase de régénération, la première sonde de gaz d'échappement (24) montée avant le catalyseur d'accumulation (13) étant réalisée sous forme de sonde de gaz d'échappement linéaire et la deuxième sonde de gaz d'échappement (26) montée après le catalyseur d'accumulation (13) étant réalisée sous forme de sonde de gaz d'échappement linéaire ou sous forme de sonde de gaz d'échappement avec une caractéristique de saut, **caractérisé en ce que** la commande de moteur (20) est réalisée pour mettre en oeuvre un procédé selon au moins l'une quelconque des revendications 1 à 6.
